# EUROPEAN PATENT SPECIFICATION

(11) **EP 0 325 839 B1**
(45) Date of publication and mention of the grant of the patent: **10.04.1996**
(21) Application number: 88310508.2
(22) Date of filing: 08.11.1988
(51) Int. Cl.: H04Q 7/08, G08B 3/10, H04L 1/00, H04L 12/54

(54) **Method and apparatus for transmitting data packets from a plurality of stations in a time division multiplexed communication system**
Verfahren und Vorrichtung zur Übertragung von Datenpakete aus einer Mehrzahl von Stationen in einem Zeitmultiplexkommunikationsssytem
Procédé et appareil pour la transmission de paquets de données d'une pluralité de stations dans un système de communication à multiplexage temporel

(30) Priority: 16.11.1987 US 121139
(43) Date of publication of application: 02.08.1989
(60) Divisional application: 94108108.5
(73) Proprietor: SEIKO CORPORATION, Tokyo 104 (JP); SEIKO EPSON CORPORATION, Suwa-shi, Nagano-ken 392 (JP)
(72) Inventor: Gaskill, Garold B., Tualatin, Oregon 97062 (US); Park, Daniel J., Beaverton, Oregon 97006 (US); Dey, Norbert E., Newberg, Oregon 97132 (US); Peek, William H., Beaverton, Oregon 97007 (US); Ragan, Lawrence H., Richardson, Texas 75080 (US); Owen, Jeffrey R., Portland Oregon 97229 (US)
(74) Representative: Meddle, Alan Leonard

(56) References cited:
- WO-A-85/00485
- WO-A-86/03645
- GB-A- 2 147 176
- US-A- 3 836 974
- US-A- 4 229 822
- US-A- 4 312 070
- US-A- 4 383 257
- ELECTRONICS AND COMMUNICATIONS IN JAPAN, vol. 64, no. 5, May 1981, pages 20-30, New York, US; OHKUBO et al.: "On interleaved codes for error-correcting codes"

## Description

### BACKGROUND OF THE INVENTION

### Technical Field

This invention relates to communication systems and methods and more particularly to a wide area paging system using portable paging receivers with low power consumption and a method of data transmission to many receivers on a common channel.

### Description of Prior Art

Prior paging systems generally provide two categories of coverage. Local area coverage is typically provided by transmitting a page simultaneously from one or more transmitters operating on a single frequency, covering all or a portion of a metropolitan area, to a recipient within the local area. Such coverage is obviously limited to the broadcast range of a local transmitter. Wide area coverage, encompassing several overlapping areas of a large metropolitan area or a number of non-overlapping metropolitan areas, is typically provided by transmitting a paging request to several transmitters via telecommunications and broadcasting the paging message from all transmitters to an intended recipient who may be anywhere within the wide coverage area. The foregoing approach to providing a wide area coverage is expensive and limited to a relatively small number of paging users.

Prior paging systems have used various methods for reducing the power consumption of battery-operated portable page receivers to minimize their overall size and to extend their battery life. One approach involves supplying power to receiver circuitry in the page receiver only during a predetermined time slot in which data for the particular page receiver is transmitted.

WO-A-8603645 relates to a watch pager system and describes a method of transmitting data packets in a time division multiplex communication system having a transmitter system comprising a plurality of stations for transmitting on different frequencies data packets including system control packets and message packets to a plurality of receivers each having an address. In this known system, the frames of the signals transmitted from the different stations are aligned in time so that the same data packets are transmitted at the same time. Therefore, if a receiver misses a message packet, it must wait until the entire frame is repeated.

US-A-3836974 describes a paging system using a plurality of transmitters transmitting paging signals on the same frequency, in which the same paging signal is sequentially transmitted from each of the transmitters in accordance with a predetermined sequence such that immediately adjacent ones of the transmitters do not simultaneously transmit, whereby the paging signal can be received essentially throughout a predetermined geographical area served by the transmitters at least once during the sequence without mutual interference by the transmitters.

The present invention aims to improve the probability of a message packet being received by a receiver in a communication system having a plurality of stations transmitting data packets on different frequencies.

Accordingly, in one aspect, the present invention provides a method of transmitting data packets in a time division multiplexed communication system having a transmitter system comprising a plurality of stations for transmitting on different frequencies data packets including system control packets and message packets to a plurality of receivers each having an address, which method is characterised by: offsetting the time of transmission of data packets from each station within the system so that data packets including the same message packets are transmitted at different relative times; encoding within a control packet the frequency and time offset of the currently tuned station relative to a predetermined zero offset station; and encoding within a control packet a list of other station frequencies and the time offset for each other station, each receiver determining from the control packets the frequency and time offset of the station that will next transmit the corresponding message packet to the receiver, whereby the probability of reception of a message packet by the receiver is improved.

In another aspect, the invention provides a time division multiplexed communication apparatus having a transmitter system comprising a plurality of stations for transmitting on different frequencies data packets including system control packets and message packets to a plurality of receivers each having an address, which apparatus is characterised by: means for offsetting the time of transmission of data packets from each station within the system so that data packets including the same message packets are transmitted at different relative times; means for encoding within a control packet the frequency and time offset of the currently tuned station relative to a predetermined zero offset station; and means for encoding within a control packet a list of other station frequencies and the time offset for each other station, each receiver determining from the control packets the frequency and time offset of the station that will next transmit the corresponding message packet to the receiver, whereby the probability of reception of a message packet by the receiver is improved.

The foregoing and additional objections, features and advantages of the present invention will be more readily apparent from the following detailed description of preferred embodiments thereof which proceeds with reference to the accompanying drawings.

### BRIEF DESCRIPTION OF DRAWINGS

Fig. 1A is a perspective view of a watch pager of a paging system embodying the present invention.

Fig. 1B is an alternate embodiment of the data display of the pager of Fig. 1A.

Fig. 2A is a diagram showing a worldwide functional hierarchy of the paging system embodying the present invention for receiving and transmitting messages to various receivers, including the watch pager of Fig. 1A.

Fig. 2B is a simplified open systems interface (OSI) model of the system of Fig. 2A, including the watch pager of Fig. 1A.

Fig. 3 is a block diagram of a portion of the system of Fig. 2A showing a local clearinghouse facility and a transmitter facility.

Figs. 4A, 4B and 4C show the preferred form of digital data protocol employed in a paging or other data delivery system according to the invention.

Fig. 5 is a block diagram of the receiver of the watch pager of Fig. 1A.

Fig. 6A is a more detailed block diagram of the receiver of Fig. 10.

Fig. 6B is a block diagram of the IF section of the receiver as shown in Fig. 6A.

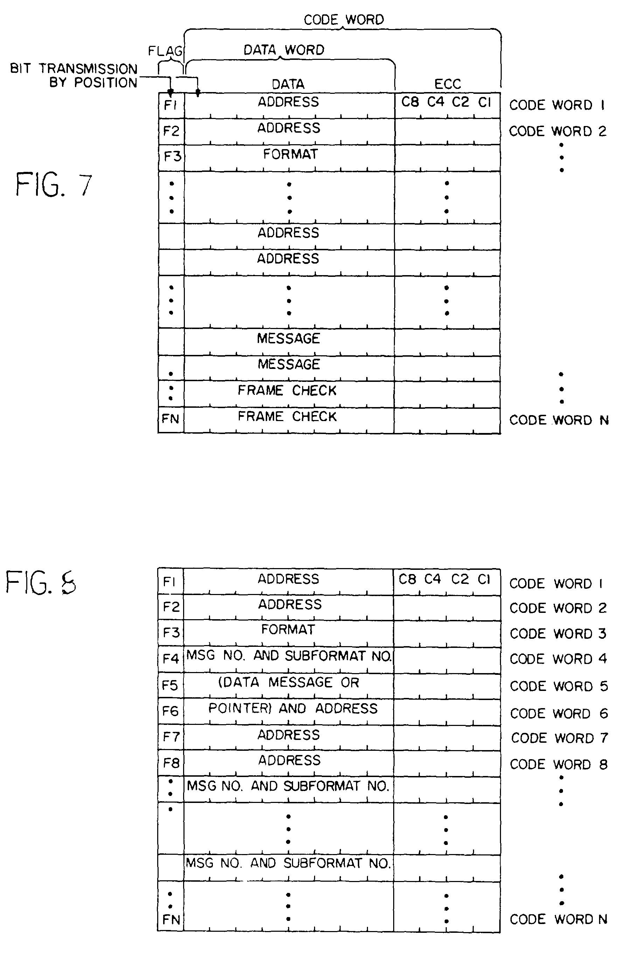

Fig. 7 is a diagram of a data packet illustrating the interleaving of code words within the packet upon transmission.

Fig. 8 is a diagram of a data packet for transmitting multiple messages within a single time slot.

Fig. 9 is a diagram of a control packet that includes a mask field and an address field for system splitting and identifies the tuned station by its frequency and time offset.

Fig. 10 is a diagram of a subframe illustrating the time offsetting of transmitting stations within a system.

Fig. 11 is a diagram of a control packet that lists the time offset and frequencies for stations to which the receiver can tune to receive a message.

### DETAILED DESCRIPTION

### 1.0 Application Level Description and Operation

### 1.1 Simplified System Model

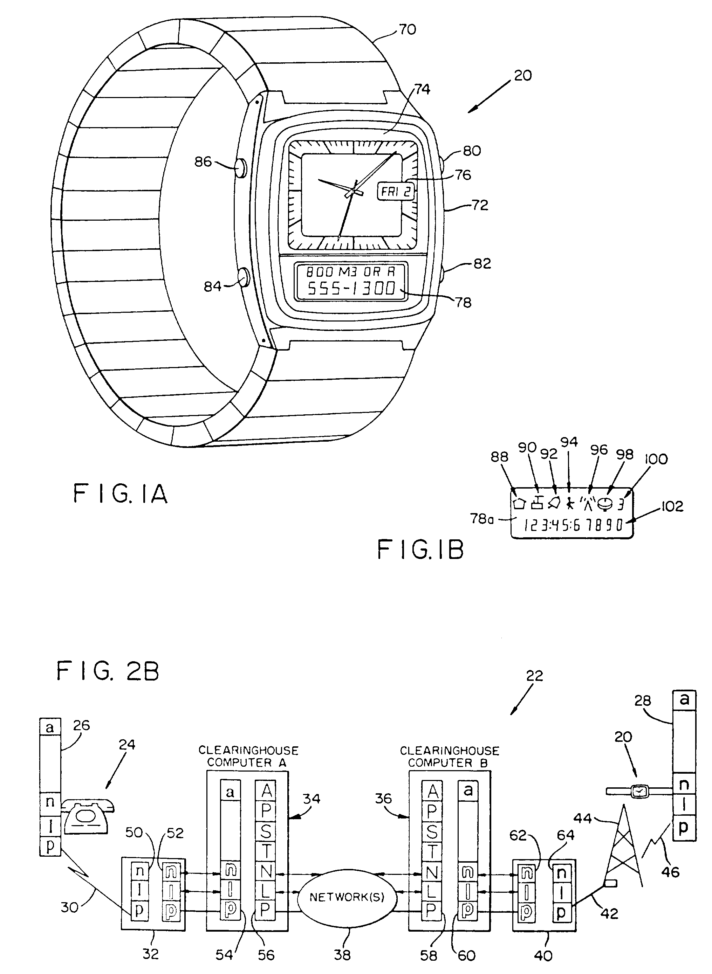

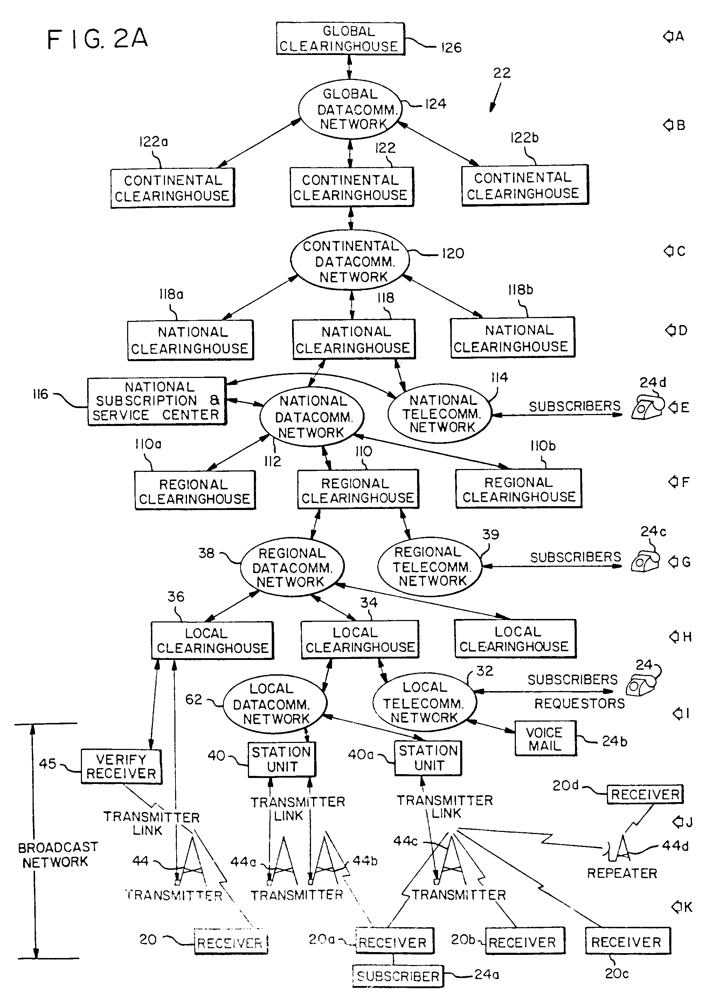

The watch pager 20 of Fig. 1A is one of a multitude of receivers in a global paging system 22 embodying the invention and shown in Fig. 2A. Before describing the global paging system and its operation, the system is described at the application level, that is, from the perspective of a user of the system.

Referring to Fig. 2B, a simplified open systems interface model of the system of Fig. 2A is shown. There are two users of the system, the wearer of paging watch 20, hereafter referred to as the receiving user, and any person who requests to transmit a page to the receiving user, hereafter referred to as a page requester or sending user. Ordinarily,it is contemplated that a page request will be initiated by means of a Touch-tone telephone 24, although a suitably programmed personal computer connected via modem into system 22 can be used. In the following description, the sending user is assumed to use telephone 24 and the receiving user to employ watch 20.

In the open systems interface (OSI) model, the letters in the blocks represent the layers of the model as follows:
a = application layer
p = presentation layer
s = session layer
t = transport layer
n = network layer
l = link layer
p = physical layer

In column 26 adjacent telephone 24, block "a" represents input signals such as dual tone multiple frequency (DTMF) tones that a sending user of the system will enter via telephone 24 and output signals such as voice prompts that such user will receive back from system 22. In column 28 adjacent watch 20, "a" represents the user interface to the watch 20, including various buttons described hereinafter that the receiving user will push to display messages received via system 22. Jagged line 30 represents the telephone connection into system 22. Block 32 represents the communications interface between the sending user and a first clearinghouse, represented by block 34, which can be called Clearinghouse Computer A. Paging requests transmitted through Clearinghouse Computer A are relayed to a second clearinghouse, represented as Clearinghouse Computer B by block 36, via any of a number of various data communications networks, represented generally by block 38. The paging requests are processed by Clearinghouse Computer B as described hereinafter. The processed requests are then relayed through a communications interface 40, via transmission line 42, to a broadcast transmitter including transmission tower 44 in the locality of the receiving user of watch 20. The tower transmits the paging requests via radio waves 46 to watch 20, which decodes the broadcast messages and displays those intended for the receiving user on the displays of watch 20.

Referring back to block 32, separate input and output columns 50, 52, each containing the letters "n," "l" and "p," represent a possible physical separation between the telephone line interface and Clearinghouse Computer A. In block 34, separate columns 54, 56 represent the input and output sides of Clearinghouse Computer A. Block 36 similarly includes separate input and output columns 58, 60. In communications interface block 40, separate columns 62, 64 denote inputs and outputs, respectively, of a message queuing machine hereafter described which can be physically separated from Clearinghouse Computer B.

Next is a description from the sending user's and receiving user's viewpoints, respectively, of operation of system 22. The internal operation of the system from elements bearing reference numerals 30 through 46 is transparent to both users. As further described hereinafter, paging watch 20 includes an electronic clock. The time on that clock is automatically set to exact local time. When the receiving user travels to a different time zone, the reset to local time will occur within approximately seven minutes of arrival to an area having a transmitter 44 that is connected in the system 22. The day and date displayed by watch 20 are also automatically adjusted.

Each watch pager in system 22 has a unique serial number correlated in the memory of Clearinghouse Computer B to an assigned telephone number of the user of the pager. Thus, a paging message can be sent to the receiving user by anyone who knows that telephone number or the name and customary local area of residence of the receiving user. Paging messages can be sent to a receiving user anywhere in the world that has a transmitter 44 connected to system 22. To facilitate this capability, the receiving user notifies the system 22 of his current location via a Touch-tone telephone.

### 1.2 Sending a Page

A sending user initiates a page by dialing the local paging telephone number on telephone 24 and awaiting computer voice instructions. The first instruction requests the telephone number of the receiving user desired to be contacted. Multiple receiving users at the same telephone number are assigned one or two unique digits in addition to the telephone number to differentiate them. After system 22 confirms the number or name of the person to be paged, the sending user presses the asterisk (*) key and a next instruction will be given.

The above-mentioned next instruction is a menu of the preferred messages that the sending user can send, as follows:
press:
1 call work
2 call home
3 come home
4 call number entered
5 special message up to fifty characters long
6 leave a voice message
7 retransmit messages
8 to hear voice messages
9 to repeat entry of telephone number of person to page

This instruction menu is ordered in accordance with descending likelihood of usage of the various messages.

The sending user selects the appropriate message by pressing the associated number on the keypad of telephone 24. If 1, 2 or 3 is pressed, no additional data need be entered. Upon the user hanging up, the message will be sent with a normal priority.

If the sending user presses 4, it is necessary to enter the number that should be called, which can be up to fifteen digits long.

If the sending user selects 5, the message sent can include both numbers and alphabetic characters. To send a letter of the alphabet, the key upon which the letters appears is pressed a number of times determined by the order of its position on the key. For example, pressing key 2 once is an "a"; pressing key 2 twice is a "b." The clearinghouse computers determine how many numbers to group together to get a letter based on the time between keystrokes, so the sending user should pause briefly between entering each alphabet character. One asterisk (*) is used to indicate a space between words; two asterisks (**) are used to indicate a period or end of sentence. A number sign (#) indicates that the next keystroke will send a number, not a letter. The system can provide for a limitation on length of message, for example, fifty characters. If the sending user attempts to send more than fifty characters, the clearinghouse computer will stop accepting data and transmit a computer-voice-generated message to the sending user, and continue to the next part of the menu.

For example, to send the message, "John Doe will arrive at 9 o'clock." the sending user presses 56664466*366633*9444555555*2777744488833*28*#9*66622255566 622255**. This message is thirty-two characters long. The words "John Doe will arrive at 9 o'clock" will be displayed on the receiving user's watch. If the message is longer than twelve characters, it will be displayed at a rate of one long word or two short words per second. If the message is labeled as "urgent," an exclamation symbol (!) will be displayed at the beginning and at the end of the message.

Continuing down the menu, by pressing 6, the sending user may leave a voice message that will indicate that the receiving user should call voice mail. A computer-generated voice will direct the sending user on how to leave a voice message for the receiving user.

The instruction associated with key 7 is used by the receiving user. By calling in to the system and pressing key 7, the receiving user causes the system to transmit or retransmit all of his messages from the previous twenty-four hours. Upon calling in and pressing 7, the receiving user would be prompted by computer voice to enter the telephone number from which he is calling, including the country code, city or area code and the local number. If he does not enter a number and hangs up, messages will be retransmitted within his home area, region or nation, depending on broadcast coverage. Entry of a phone number allows the paging system to know where to send the receiving user's messages. The computer voice will confirm what country and city the user has entered, and will request reentry of the number if either are invalid numbers. If there is no broadcast coverage in the area entered, the receiving user will be so informed and the messages will not be sent.

Instruction 8 is also provided for the receiver user. By calling in to the system and selecting 8, the user can receive voice messages that have been left for him. Again, he will be instructed by the computer-generated voice on how to retrieve the messages. A receiving user can be assigned a secret code number which must be entered into the system to receive voice messages.

If the caller into the system presses 9, the foregoing instruction sequence is repeated.

A final instruction is provided which is valid only for operation in connection with the foregoing instructions 1, 2, 3, 4, 5 and 6. This instruction establishes the priority or urgency of the message:
press:
1 for urgent
2 for normal
3 for low priority.

An urgent message will be sent up to four times in the span of thirty minutes. A normal message will be sent three times in thirty minutes. A low priority message will be sent as soon as higher priority messages have been transmitted, approximately twice in sixty minutes.

The sending user may hang up the telephone after pressing the urgency code if the receiving user to be paged is in such receiver user's home area.

### 1.3 Watch Pager Arrangement

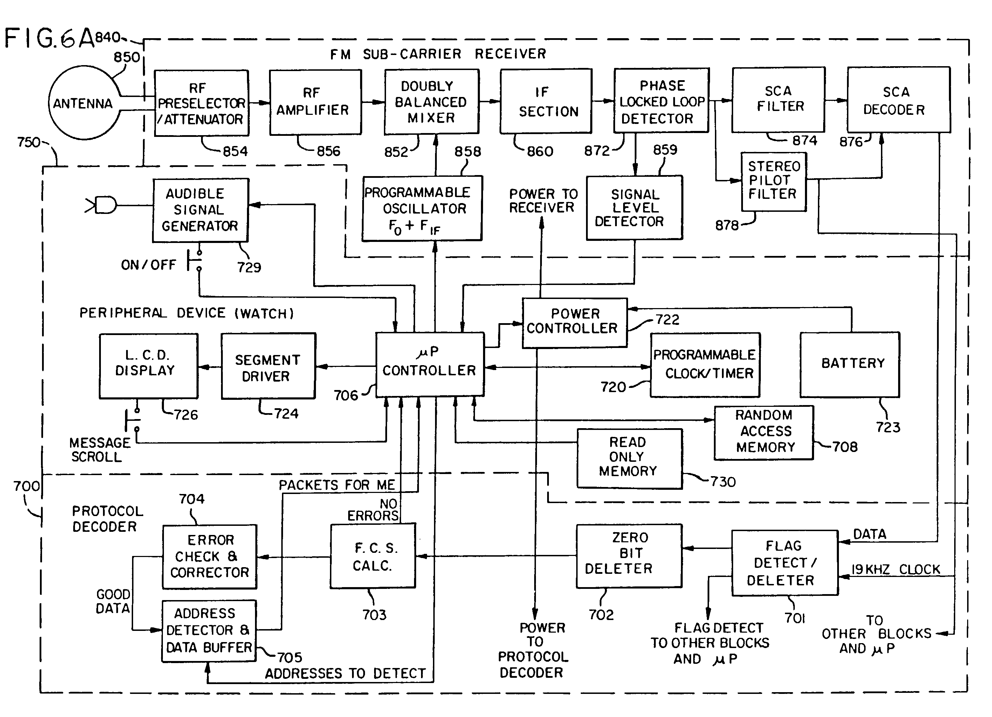

Referring back to Fig. 1A, paging watch 20, used by each receiving user, is arranged much like a conventional digital wristwatch. The watch has a wristband 70, which incorporates an antenna, as described hereinafter, and an electronic clock and paging device 72. Device 72 includes internal electronic circuitry, shown in block diagram form in Fig. 6A. Device 72 has an analog watch display face 74 and, optionally, a day-date display 76, both of which are conventional. Device 72 also includes a paging data display 78, for displaying an area code and telephone number and various message symbols.

Device 72 has four control buttons 80, 82, 84, 86, two on each side of the watch face. Button 80 is a conventional analog watch time and date setting control knob. Button 82 is a function select button for displaying and acknowledging messages, toggling the bell/silent message-waiting signal, and for toggling the roam/home function. Button 84 determines the mode of operation of the watch. Button 86 is a reset button, pressed once to resynchronize and test the device after changing the battery and twice for serial number and registration of the watch.

An alternate embodiment of display 78a, shown in Fig. 1B, contains two rows of characters. The top row of characters are icons including, reading from left to right, a call home symbol 88, a call office symbol 90, a bell/silent symbol 92, a roam/home symbol 94, a signal availability symbol 96, a low battery indicator 98, and an unacknowledged message counter 100. When the bell/silent symbol 92 appears, an audible signal will be generated by a beeper in the device 72 when a message is received. The signal availability symbol 96 flashes when device 72 is scanning for a signal, is off when no signal can be found, and is on steadily when a valid signal is found. The unacknowledged message counter 100 displays the number, 1 through 9, of messages not acknowledged. If 0 is displayed, no messages have been received and the device displays the current time in row 102. If a 9 appears, flashing, no more messages can be received until the receiving user presses the select button to display and acknowledge the messages stored.

The second row 102 of characters is a ten-digit, two-colon display of seven-segment characters. A more complex display, such as a fourteen-segment or a dot-matrix character display, can be used as an alternative, to display alphabetic as well as numeric characters.

### 1.4 Receiving a Page

Upon receiving a page, the receiving user will be notified by a signal from watch pager 20 either audibly by beeps from the internal beeper or visually by rapid, e.g., flashing of bell 92 on display 78 and incrementing of the unacknowledged message counter 100. The selection between the audible and silent signal is made by actuation of select button 82 while in the mode in which the bell is flashing. If the audible signal has been selected, bell icon 92 will be displayed continuously. If silent signal has been selected, the bell icon will not be displayed.

The simplest messages are displayed by the icons. For a call home message, the house icon 88 is displayed. For message to call the office, factory or desk icon 90 is displayed. For a message to call a telephone number, transmitted by the sending user, the number is displayed in the row 102 of characters. Long telephone numbers are split up with the country and city or area code displayed first and the additional numbers displayed after the user presses the select button 82.

For all types of pages/messages, the first items displayed after receiving a message are the time of message reception in hour and minutes and message number. In the case of call home and call office messages, upon reception, the lower display will only show the time of reception and message number. If the message is to call a transmitted telephone number, the time and message number will be displayed for approximately three seconds before the telephone number to be called is displayed.

The select button 82 controls the displayed message. Pressing the select button will let the watch know that the receiving user has read the message, whereupon the watch will display the next oldest message. Before receiving the first message, the unacknowledged message counter will be 0. This will cause display of the normal watch function of time, day and date on display 78. Once the first message is received, the message counter will be set to a 1 and the message will be displayed. If another message is received before the user presses the select button, the message counter will be set to 2. The first unacknowledged message will continue to be displayed and the second and subsequent unacknowledged messages up to nine total will be stored in a first-in first-out (FIFO) memory in device 72. If messages continue to be received and not acknowledged by the user pressing the select button, the message locations will eventually become full and no new messages can be received and stored. When this happens, the unacknowledged message indicator 100 beings flashing. If the receiving user presses the select button, then the unacknowledged message counter will point to the next oldest unacknowledged message and the acknowledged older messages will be deleted when the message locations are full, allowing reception of new messages. The oldest unacknowledged message is always displayed, and an unacknowledged message count of 1 always displays the latest message received. Pressing the select button when the counter is 1 will again display the normal watch function of time, day and date and the counter will be 0. If mode button 84 has been set in the scroll mode, pressing the select button again will wraparound the oldest message contained in the message memory and cause it to be displayed on display 78.

If the receiving user has been constantly in range of a transmitting tower 44, and the watch pager has been locked onto a transmitter frequency and received valid transmissions, then the tower icon 96 is constantly on. If the receiving user has been out of range of the transmitter or there has been some malfunction that prevents valid signal reception during the assigned time slot of such user's device, this condition is indicated by the absence of the transmitter tower icon 96 on display 78. Because the preferred embodiment utilizes FM signal transmission, difficulty in receiving signals can arise if the receiving user is in a valley or large building. To alleviate this problem, all messages are transmitted at least twice, at various time intervals.

If the receiving user has been traveling in a poor reception region for a long time or traveling in an airplane, then such user can request that his messages from the last twenty-four hours be retransmitted. This is done by calling the paging telephone number and selecting menu option 7. After hanging up, the receiving user presses the reset button 86. This will cause the paging watch device 72 to "wake up" or reset and immediately search its stored frequency list for a valid signal. The tower icon 96 will flash and, if an alphanumeric display is used, the word "RESET" will be displayed on the digital display 78, indicating that the receiver is searching for valid signals.

Once a valid signal has been found, the watch pager searches for messages to be transmitted. When the message with the time, day and date are received, the display 78 reflects this by turning icon 96 on steadily and displaying the time, day and date in line 102. The message with time, day and date also contains a list of the home frequencies, and other information about the local system. As further discussed hereinafter, home frequencies are the FM transmission frequencies within the present locality of the receiving user. Usually, these are the frequencies in the local area where the receiving user resides but, if the user travels to a new area, a new set of home frequencies is stored for the new area. Pressing reset will cause a slightly increased drain on the batteries for about one minute. The watch pager will then return to a normal mode of operation, described hereinafter, of looking for transmissions at the pager's assigned time slot. Any messages the pager has already received and not deleted will not be displayed, as each message has a unique identification number.

If a receiving user expects to be traveling outside of his home standard metropolitan area, such user should put the receiver into home/roam mode by pressing button 84 until the icon 94 of a roaming man begins flashing. The receiving user then presses select button 82. If the icon disappears, the receiver is in the home mode and it searches its list of home frequencies for valid signals. This searching is done in a time period just before the receiver's assigned time slot. If a valid signal is found, then the transmitter tower symbol 96 will be constantly on until the next search time. If no valid signal from the list is found, the transmitter tower symbol is turned off. Home mode is a battery-saving feature.

To move to the roam mode, select button 82 is pressed until the icon 94 is steadily on. The receiver again searches for a valid signal in the home frequency list first, but if no signal is found, it will then search all possible frequencies. After receiving a valid signal, a new home frequency list will be received from the local clearinghouse. Full searching will resume only if a valid frequency in the new home frequency list is not found in the next assigned time slot. If no valid signal is found after several all-frequency searches, then searching stops until the next assigned time slot and the tower icon 96 is turned off.

Watch pager 20 uses conventional watch batteries, which should last about one year under normal use. A weak battery is indicated by battery icon 98 flashing on and off at about one second intervals. Depending on the amount of subsequent usage, this indicator provides about twenty-four hours warning in which to replace the batteries. After replacing the batteries, the receiving user presses the reset button 86 to start the watch looking for current time, day and date and for messages, for all possible frequencies.

If transmission of a message has been missed and the transmission of another message is received later, the missed message is displayed as hyphen marks "--," then the message number modulo 32. The hyphen marks and the message number indicate that it is known by the message number that a message was missed but was not properly received. This message will remain in memory until the missed message is received in a retransmission. If a missed message is not received and new messages accumulate to fill the memory, the missed message is pushed off the stored message stack by the newer messages. To display the valid message received, the select button 82 is pressed. If the message previously missed is later received in a retransmission, then the proper message will be immediately displayed, since it will be the oldest unacknowledged message.

For example, assume a message to call a telephone number is received at 10:30, and it happens to be message 32 (message number is modulo 32). Then the sequence of information displayed on the lower display 102 would be as shown below, starting with the first line and displaying the next on the conditions explained:

| Display | Explanation |
|---|---|
| 10:30 -31 | time received and message number 1 through 32 displayed for 3 seconds |
| 123-456- | country and (city or area code) displayed (if sent) until next select |
| 789-0123 | exchange and local number displayed until next select |
| 10:35 | time of day, displayed until next select or new message received |
| 85-07- 23 | Date displayed if select 82 was pressed, displayed until next select is pressed |
| 10:45 -32 | time received and message number displayed if new message arrives |

Operation of the watch pager 20 is tested in a test mode to verify that the watch pager and system 22 are functioning properly. Pressing select 82 while in the test mode (the tower icon will be flashing off and on) causes the watch pager to look for a valid signal immediately instead of at its assigned time slot. If the watch pager is working properly, in a good reception area, and there is a broadcast tower transmitting a valid data protocol, then the tower icon 96 will be constantly on. If there is no valid signal found in the frequency search list, then the tower icon is turned off. The test mode, like all other modes, is exited by pressing the mode button.

### 2.0 System Description

### 2.1 Network Hierarchy

Referring to Fig. 2A, a portion of global paging network 22 is shown to illustrate the levels of hierarchy within the network. At the lowest level, K, are receiving units 20, 20a, 20b, 20c and 20d. The receiving units can be portable watch pager receivers like device of Fig. 1A, or can be functionally equivalent fixed base units such as receiver 20a of Fig. 2A, which services a data transmitting and receiving subscriber 24a. All of these receivers receive transmissions of data by FM broadcast from transmitters 44, 44a, 44b, 44c and repeater 44d. Associated with each transmitter is a verification receiver 45, which includes receiver apparatus functionally equivalent to that of device 20. It receives and decodes transmissions from each transmission tower 44 and compares the decoded data with the corresponding data input to the transmitter to verify the accuracy of transmission. This verification is ordinarily carried out at a local clearinghouse such as Clearinghouse B. At the next level in the hierarchy, level I, are the local data communications and telecommunication networks, including telephone interface 32 for telephones 24 and voice mail subscribers 24b. At level H are the local clearinghouses, identified with reference numerals 34, 36 to correspond to Fig. 2B.

Farther up the hierarchy, the network 22 includes regional data communications network 38 and a regional telecommunications network 39, through which additional subscribers 24C can access the system to send paging messages or can subscribe to the system. The regional data and telecommunications networks 38, 39 are connected, in turn, to a regional clearinghouse 110. The regional clearinghouses 110, 110a, 110b operate much as a local clearinghouse but on a regional basis. It transfers paging and other digital messages from one locality to another through the regional data communications network 38 to the appropriate local clearinghouse for broadcast in the locality of the intended recipient of the data.

Above the regional clearinghouse level, at level E, are national data and telecommunications networks 112, 114. A national system subscription and service center 116 is connected to the national data communications network 112. Page-sending users and other subscribers 24D can also assess system 22 at the national level through the national telecommunications network 114. Transfers of information at the national level are handled by national clearinghouses 118, 118a, 118b, as illustrated at level D. The national clearinghouses are in turn connected to a continental data communications network 120, illustrated at level C. Transfers of blocks of digital data between nations are controlled by continental clearinghouses 122, 122a, 122b. Transcontinental or global transfers of data are made over a global data communications network 124 under control of a single global clearinghouse 126.

It should be understood that the foregoing is a simplified illustration of a global paging network 22, many interconnections and collateral blocks being omitted for clarity. It will also be appreciated that single block elements, such as regional data communications network 38 can comprise elements of a number of other networks, such as telecommunications company and private digital data packet networks. Likewise, the regional telecommunications network 39 can include various elements of different telecommunications organizations, connected both in parallel and serially.

### 2.2 Clearinghouse Arrangement

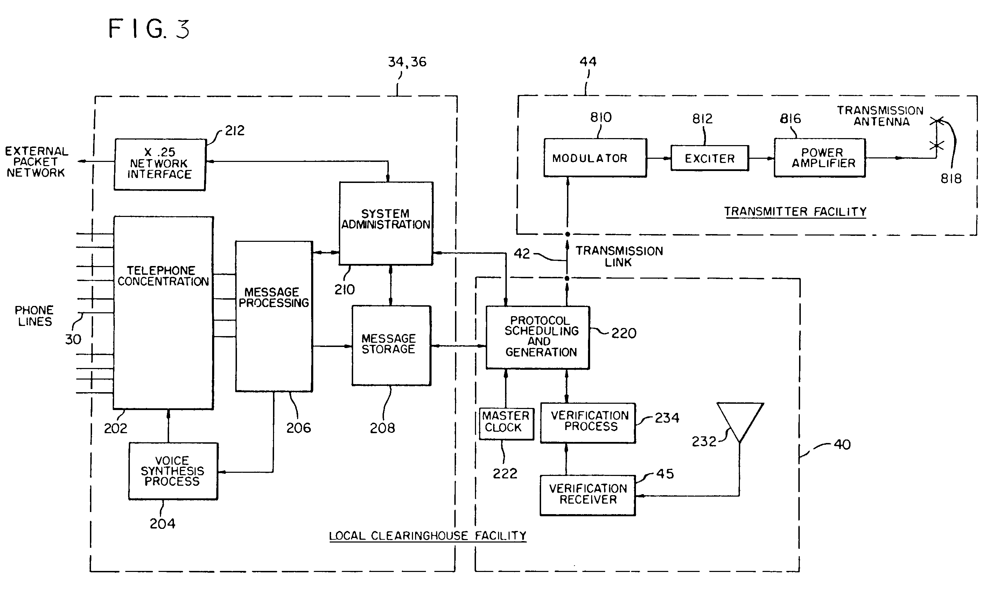

Fig. 3 shows, in greater detail, a local clearinghouse facility and transmitter facility. Relating Fig. 3 to Fig. 2B, each local clearinghouse facility includes the capabilities of both Clearinghouse A and Clearinghouse B. Each local clearinghouse includes a computer facility, indicated by a dashed line block bearing reference numerals 34, 36 to correspond to Clearinghouse Computers A and B in Fig. 2B. Sending-user messages enter the computer facility via phone lines 30, being received by telephone concentration unit 202. Sending user interaction is facilitated by voice synthesized instructions provided by a voice response processing unit 204. Units 202, 204 collectively provide the communications interface 32 of Fig. 2B. A computer, including message processing unit 206, message storage 208 and system administration elements 210 provide the remaining functions of computer 34 on the left side of Fig. 2B. A packet network interface 212 connects the local clearinghouse computer to receive and transmit packets of data from and into an external packet network 38. An operator assistance block can also be provided in conjunction with multiplexer 202 to provide assistance to a page originator who cannot properly respond to the automated instruction sequence.

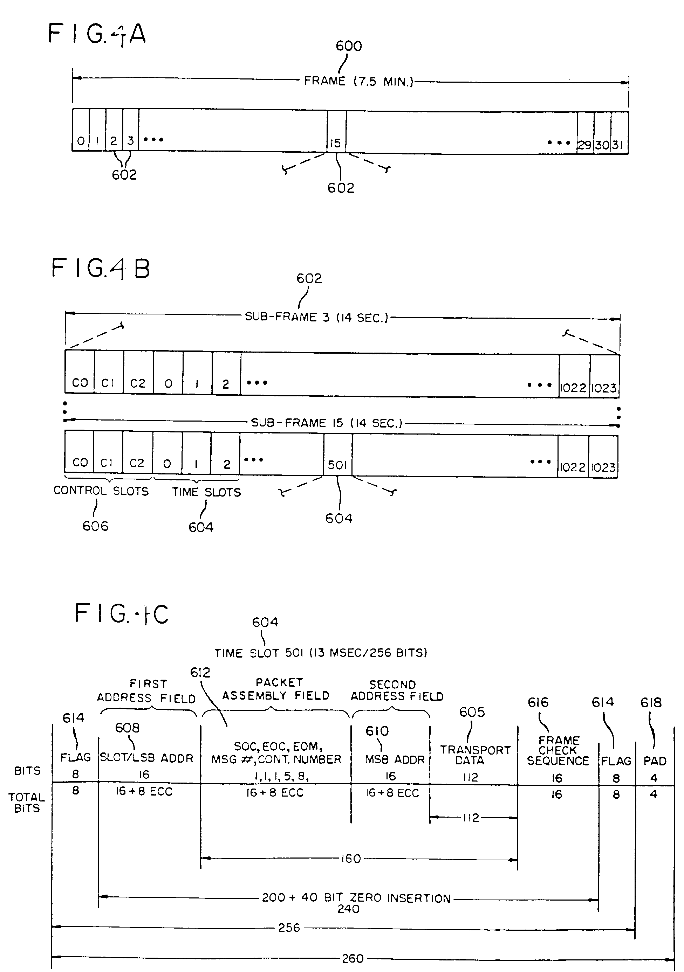

Moving to the right side of Fig. 2A, elements 206, 208, 210 in Fig. 4 also provide the functions of Clearinghouse Computer B. They receive and process messages and transfer same to a queuing machine 40, which includes a second computer 220 for protocol scheduling and generation. Queuing machine 40 need not be co-located with the primary clearinghouse computer 34, 36. Computer 220 has a master clock 222, which controls the timing of all messages that are broadcast in the locality of the local clearinghouse facility. Messages are formatted by computer 220 and queuing machine 40, in accordance with a protocol described hereinafter.

The paging messages are then sent by transmission link 42 to transmitter facility 44 in the order in which they are to be transmitted. The transmitter facility generally includes a subcarrier generator and modulator 810, an exciter 812, power amplifier 816, and an antenna 818. As mentioned above, messages are broadcast from antenna 818 for reception by watch pagers 20 and various other receivers shown in Fig. 2A.

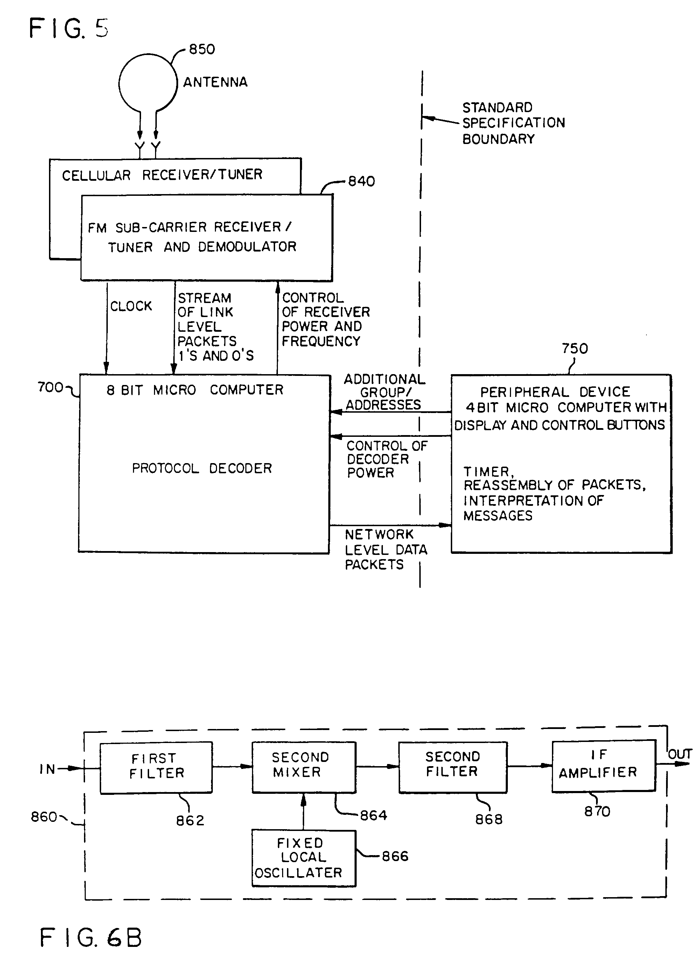

One such other receiver is the verification receiver 45, mentioned in connection with Fig. 2A. The verification receiver includes an antenna 232 for receiving transmissions broadcast from antenna 818. Received transmissions are output to a verification process unit 234. Unit 234 performs a comparison between the data transmitted from computer 220 and the decoded data from the verification receiver. If an error is detected in the decoded data, computer 220 is notified. Computer 220 causes the data to be retransmitted at the appropriate time to the addressed receiver. The verification receiver and decoding elements are functionally the same as those used in watch pager 20, as described hereinafter with reference to Figs. 5, 6A and 6B.

### 3.0 Data Protocol and Receiver Operation

### 3.1 Message Format

The format for transmitting messages is shown in Figs. 4A through 4C. The format comprises a time frame 600 (Fig. 4A) of a predetermined length such as seven and one-half minutes, which is repeated cyclically. Within each frame 600 are a predetermined number of subframes 602. Thirty-two subframes of about fourteen seconds each are shown in Fig. 4A. Each subframe is uniquely numbered 0, 1, 2...31. Moving to Fig. 4B, each subframe in turn comprises a predetermined number of time slots 604 during which a packet is transmitted. In Fig. 4B, 1,024 time slots of about thirteen milliseconds each are shown. Each time slot is uniquely numbered 0, 1, 2, ...1023. In the illustrated example, the numbering of the time slots and subframes is sequentially increasing but this particular numbering scheme can be different so long as it repeats predictably in each frame. Subframe and time slot number information are sent in the transmitted data, and used by the receivers, as described hereinafter to determine a reference point within a frame.

Each packet transmitted within a time slot contains 256 bits of information and 4 padding bits and carries 112 bits of message or transport data 605, as shown in Fig. 4C. Each subframe also has control slots 606 for transmitting packets of control information. Control slots 606 are like time slots 604 in both duration and format, but differ in information content as described hereinafter.

The size and duration of frames, subframes and time slots can be varied. The duration and number of time slots should, however, be of the order illustrated to enable a very short receiver duty cycle (e.g., as low as 0.006% in the illustrated example) and frequently-recurring opportunities to transmit paging messages to a large number of users on a single channel (32,768 time slots per 7.5 minutes). The transmitted data rate must likewise be on the order of 19 kilobits to support the protocol and message format described herein. Also, using very short duration time slots is an important factor in improving reception reliability in very high frequency paging systems.

The message packet shown in Fig. 4C is generated as described in the previous section, starting with transport data 605. The following description of the message packet is arranged in the order in which it is built up. Each watch pager or receiver is assigned a unique serial number. Referring to Fig. 4C, the address field within a packet includes first and second fields, 608, 610. Ordinarily, for a single packet intended for an individual receiver, the address field matches the address of the receiver. For a specified group of receivers, e.g., firemen, only a specified portion of the packet address need match the addresses of the receivers assigned to the group. The second address field is discussed next.

Second address field 610 contains the most significant 16-bits (MSB) of the receiver's address, which correspond to the first part of the receiver's serial number. The first of these most significant bits indicates whether the message is for a group of receivers (1) or for an individual receiver (0). For Group receivers, the remaining 15-bits correspond to the Group number. For individual receivers, these bits constitute a part of the individual receiver's address (which is its serial number), of which the remainder is provided by address field 608. Individual receivers with different most significant bits can thus share the same time slot and subframe. A power-limited receiver will turn on briefly during its assigned time slot and subframe(s) to detect if its full address matches that address in the packet. If it does so, it will remain on to accept and process the data in the packet. If it does not, it turns off until the arrival of a control packet in the subframe immediately preceding its assigned subframe. Receivers, of course, could be designed to turn on more often, up to once every 14.0625 seconds. As further discussed below, the control packet indicates, to the receiver, time, date and other system information including a list of possible frequencies to use before turning on again at its assigned subframe and time slot.

A non-power-limited receiver (not shown) can monitor all packets transmitted. Receivers of a specific assigned group (e.g., receivers monitoring stock market reports) will detect packets having a matching group address. These packets, which carry group messages, can arrive in any time slot not carrying messages for another receiver. Thus, a full power receiver is required in most cases to receive group messages on a regular basis.

First address field 608 contains the least significant 16-bits (LSB) of a receiver address corresponding to a first portion of a receiver's assigned serial number. For an individual receiver being sent a single packet, the least significant or lower 10-bits of packet address field 608 correspond to an assigned time slot number and to the least significant 10-bits of the receiver's address. The remaining or upper 6-bits of field 608 are ordinarily used to identify to the receiver one or more subframes, depending on how many of the bits are masked by the receiver. These 6-bits also match a corresponding portion of the individual receiver's address and, for a receiver that normally turns on once each frame, corresponds to subframe number. If one bit of the upper 6-bits is masked, the subframe number, as interpreted by the receiver, recurs every 32nd subframe. If two bits are masked, the subframe number recurs every 16th subframe, so the individual receiver turns on twice each frame. When a group message is transmitted, field 608 contains the subframe number and time slot number in which the message is transmitted.

### 3.2 Control Slots

Referring back to Fig. 4B, system control information provided by the clearinghouse is transmitted by packet in three control slots 606 at the beginning of each subframe 602. This information directs the receiver to a system and a channel for receiving the following packets that contain message data.

All receivers can receive control packets. Control packets have the same format as data packets 604, as shown in Fig. 4C, but always have the subframe number in bits 10-15 of the first address field, as contrasted with the data packets which contain a portion of the receiver address at that location. As discussed previously, the number of subframes that a receiver will turn on in a frame can be varied by masking and unmasking bits within bits 10-15.

The first control packet in each subframe uses binary coded decimal (BCD) for its transport data which comprises a system identification number of the local clearinghouse (four BCD characters), the month and day of the month (six BCD characters), and the 24-hour time (7 BCD characters) to synchronize the clock within watch 20. The first packet also includes a status counter modulo 10 (1 BCD character). Each time the system information is modified (described below), this counter is updated so that receivers may detect a change in the transmission system. The data content of the first control packet ordinarily remains constant except for time of day, until new system information is input.

In the second and third control packets, binary code is used to provide information on system characteristics, such as the number of systems in an area, how the addresses of groups and individual receivers are relocated to the various systems, and the number of channels in a tuned system. In large, densely populated areas, it may be necessary to have several systems for the individual addressed receivers. The proper system for a given receiver is determined by two 4-bit numbers within the control packet. The bit fields of each of these numbers correspond to bits 19 through 16 of the serial numbers on an individual addressable receiver.

These two 4-bit numbers determine how the addresses of various receivers are assigned to each system in an area. The first of the 4-bit numbers acts as a mask, ANDED with bits 19 though 16 of the receiver address to determine the number of systems into which an area is split. For example, a 0011 would mask the two most significant bits and display a receiver's seventeenth and sixteenth address bits. These bits are then compared with a second 4-bit number which represents which of the systems in the area the receiver is currently receiving. If this number does not match the receiver's corresponding address bits, the receiver scans the frequency spectrum until it detects the transmission system having the corresponding bits. For example, if a system broadcasts a 0010 and the receiver's seventeenth and sixteenth address bits were 01, then the receiver will continue to scan until it locks onto the 01 system.

The second packet also contains the number of the channels in the particular system given in the packet. Binary encoding of each channel in the system is used. In the case of FM side bands, channel 1 is 76.1 MHz, channel 2 is 76.3 MHz, etc. The third packet can contain additional channel numbers. Once a receiver tunes to the system, the transmitter can send it to eight channel numbers in a control packet. It then scans the associated frequencies for a channel of sufficient transmission power and stores those frequencies in case the signal strength of the tuned channel drops too low for adequate reception by the receiver. The receiver will then tune to another of the frequencies associated with its system until it finds a channel of sufficient signal strength.

### 3.3 Time Offsetting of Station Transmissions

A receiver may miss its data packet transmitted from its currently tuned station, either because the receiver turned on too late to receive the packet or because of noise that interfered with packet reception. To improve the probability that the receiver will receive its data packet, a control packet transmitted by the currently tuned station may also include time offset information that indicates that the message is also being transmitted from other stations within the system at different times.

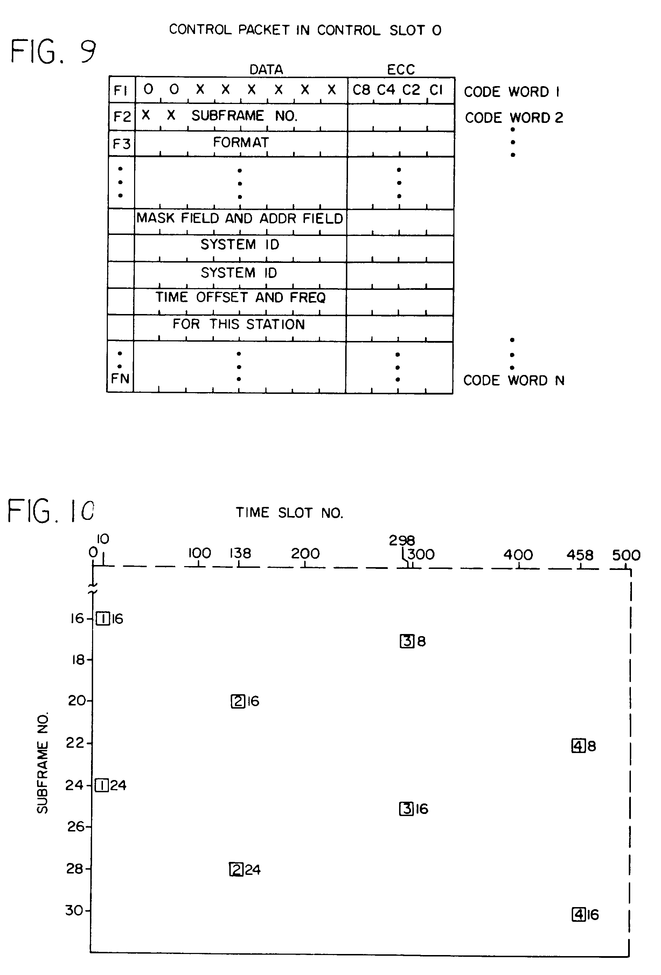

Fig. 10 is a diagram of a transmitted frame that illustrates the time offset, with subframes 0-31 indicated on the vertical axis and time slots 0-500 of the 1027 total slots indicated on the horizontal axis. The 32 subframes result from a masking of the most significant bit of the subframe identification number as discussed in Section 3.1. For example, four stations 1-4 with different frequencies within the transmitting system are assigned a time offset number. Station 1 is the zero offset station with a time offset number of 0 and is the reference station for the frame. Station 2 has a time offset number of 4; station 3 has a time offset number of 9; and station 4 has a time offset number of 14. Each unit of time offset is equal to a preselected number of time slots such as 1059 time slots with a duration of about 13.7 msec each. In the present example, station 2 therefore transmits its frame 58.0 seconds after station 1; station 3 transmits its frame 130.5 seconds after station 1; and station 4 transmits its frame 203.0 seconds after station 1.

Assume, for example, that the addressed receiver is to turn on in time slot 10 of subframe 0, 8, 16, and 24 of the tuned station, with a packet for that receiver being sent twice on each station. In Fig. 10, each small square represents a packet with a message for the addressed receiver; the number within the square represents the station number; and the number to the right of the square represents the subframe number of the station transmitting the packet. The message packet is thus sent in slot 10 of subframes 16 and 24 of stations 1 and 2, and in slot 10 of subframes 8 and 16 of stations 3 and 4.

Fig. 10 shows how often the message packet is sent relative to the reference frame of station 1. On station 1, of course, the message packet appears during slot 10 of subframes 16 and 24. Because of the time offset, however, the message packet on station 2 appears 1059 times the time offset number of 4 which is slot 138 of subframes 20 and 28 of station 1. Because of the different subframes for transmission on stations 3 and 4, the message packet from station 3 appears during slot 298 of subframes 17 and 25 of station 1, and from station 4 during slot 458 of subframes 22 and 30 of station 1. In total, then, the message appears eight times during the frame.

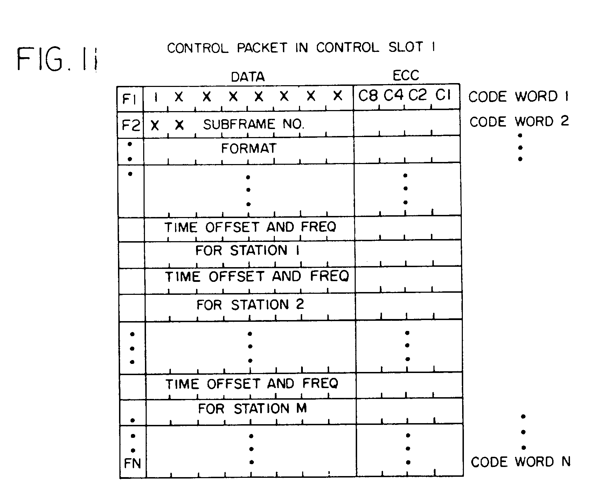

Referring now to Figs. 9 and 11, the receiver will have read both these control packets for control slots 0 and 1, respectively, which contain the frequency and time offset for the presently tuned station and a list of alternative stations to which the receiver can tune to receive its message. In Fig. 9, octets 10 and 11 of the control packet indicate the time offset of the currently tuned station relative to a predetermined zero offset station. The time offset is a 6-bit number that expresses the offset in units equal to a predetermined number of time slots, such as 1059, 1043, etc., designated in the system. The other ten bits indicate the current station's frequency. For FM radio stations, station numbers range from 1 to 641. Stations are positioned 50 kHz apart, starting with station 1 at 76.0 MHz and ending with station 641 at 108.0 MHz. The ten bits therefore uniquely specify an FM radio station in the 76.0 to 108.0 MHz range. The list provided in the following control packet of Fig. 11 comprises the station numbers ranging from 1 to 641 and the time offset for each.

If a receiver turns on in its assigned slot at its currently tuned station and finds no data, it utilizes the list of frequencies and offsets that it previously received in the control packets. From the list of offsets and the offset of the currently tuned station, the receiver determines the next station by its frequency that will transmit the missed message packet. If the last successful station was number 2 and the receiver turns on at subframe 24, for example, the receiver will find no data. It then proceeds to tune to the next station, station 4, at subframe 30, slot 458 relative to station 1 to receive the message packet as indicated in Fig. 10.

## Claims

1. A method of transmitting data packets in a time division multiplexed communication system (22) having a transmitter system comprising a plurality of stations (44) for transmitting on different frequencies data packets (602) including system control packets (606) and message packets (604) to a plurality of receivers (20) each having an address, which method is characterised by:
offsetting the time of transmission of data packets from each station within the system so that data packets including the same message packets are transmitted at different relative times;
encoding within a control packet the frequency and time offset of the currently tuned station relative to a predetermined zero offset station; and
encoding within a control packet a list of other station frequencies and the time offset for each other station, each receiver determining from the control packets the frequency and time offset of the station that will next transmit the corresponding message packet to the receiver, whereby the probability of reception of a message packet by the receiver is improved.

2. A time division multiplexed communication apparatus (22) having a transmitter system comprising a plurality of stations (44) for transmitting on different frequencies data packets (602) including system control packets (606) and message packets (604) to a plurality of receivers (20) each having an address, which apparatus is characterised by:
means (220) for offsetting the time of transmission of data packets from each station within the system so that data packets including the same message packets are transmitted at different relative times;
means (220) for encoding within a control packet the frequency and time offset of the currently tuned station relative to a predetermined zero offset station; and
means (220) for encoding within a control packet a list of other station frequencies and the time offset for each other station, each receiver determining from the control packets the frequency and time offset of the station that will next transmit the corresponding message packet to the receiver, whereby the probability of reception of a message packet by the receiver is improved.

## Patentansprüche

1. Verfahren zum Übertragen von Datenpaketen in einem Zeitmultiplexkommunikationssystem (22) mit einem Sendesystem, das eine Mehrzahl von Stationen (44) zum Senden von Datenpaketen (602) einschließlich Systemsteuerpaketen (606) und Nachrichtenpaketen (604) auf unterschiedlichen Frequenzen an eine Mehrzahl von Empfängern (20) aufweist, von denen jeder eine Adresse hat, Verfahren gekennzeichnet durch:
zeitliches Versetzen der Sendezeit von Datenpaketen von jeder Station innerhalb des Systems, so daß Datenpakete, die die gleichen Nachrichtenpakete enthalten, zu unterschiedlichen relativen Zeiten gesendet werden;
Verschlüsseln, innerhalb eines Steuerpakets, der Frequenz und des Zeitversatzes der aktuell abgestimmten Station relativ zu einer vorbestimmten Station ohne Zeitversatz; und
Verschlüsseln, innerhalb eines Steuerpakets, einer Liste von anderen Stationsfrequenzen und des Zeitversatzes für jede andere Station, wobei jeder Empfänger aus den Kontrollpaketen die Frequenz und den Zeitversatz der Station bestimmt, die als nächstes das entsprechende Nachrichtenpaket an den Empfänger sendet, wodurch die Wahrscheinlichkeit des Empfangs eines Nachrichtenpakets durch den Empfänger verbessert wird.

2. Zeitmultiplexkommunikationsvorrichtung (22) mit einem Sendesystem, das eine Mehrzahl von Stationen (44) zum Senden von Datenpaketen (602) einschließlich Systemsteuerpaketen (606) und Nachrichtenpaketen (604) auf unterschiedlichen Frequenzen an eine Mehrzahl von Empfängern (620) aufweist, von denen jeder eine Adresse hat, Vorrichtung gekennzeichnet durch:
Mittel (220) zum zeitlichen Versetzen der Sendezeit von Datenpaketen von jeder Station innerhalb des Systems, so daß Datenpakete, die die gleichen Nachrichtenpakete enthalten, zu unterschiedlichen relativen Zeiten gesendet werden;
Mittel (220) zum Verschlüsseln der Frequenz und des Zeitversatzes, innerhalb eines Steuerpakets, der aktuell abgestimmten Station relativ zu einer vorbestimmten Station ohne Zeitversatz; und
Mittel (220) zum Verschlüsseln, innerhalb eines Steuerpakets, einer Liste von anderen Stationsfrequenzen und des Zeitversatzes für jede andere Station, wobei jeder Empfänger aus den Steuerpaketen die Frequenz und den Zeitversatz der Station bestimmt, die als nächstes das entsprechende Nachrichtenpaket an den Empfänger sendet, wodurch die Wahrscheinlichkeit des Empfangs eines Nachrichtenpaketes durch den Empfänger verbessert wird.

## Revendications

1. Un procédé pour la transmission de paquets de données dans un système de communication à multiplexage à division du temps (22) ayant un système transmetteur comprenant une pluralité de stations (44) pour transmettre à différentes fréquences des paquets de données (602) incluant des paquets de commande de système (606) et des paquets de message (604) à une pluralité de récepteurs (20) ayant chacun une adresse, lequel procédé est caractérisé par :
décaler le temps de transmission des paquets de données depuis chaque station dans le système afin que des paquets de données incluant les mêmes paquets de message soient transmis à des instants relativement différents ;
coder dans un paquet de commande la fréquence et le décalage temporel de la station en train d'être accordée par rapport à une station prédéterminée à décalage nul ; et
coder dans un paquet de commande une liste d'autres fréquences de station et le décalage temporel pour chaque autre station, chaque récepteur déterminant à partir des paquets de commande la fréquence et le décalage temporel de la station qui transmettra ensuite le paquet de message correspondant au récepteur, afin que la probabilité de réception d'un paquet de message par le récepteur soit améliorée.

2. Un appareil de communication à multiplexage à division du temps (22) ayant un système transmetteur comprenant une pluralité de stations (44) pour transmettre à différentes fréquences des paquets de données (602) incluant des paquets de commande de système (606) et des paquets de message (604) à une pluralité de récepteurs (20) ayant chacun une adresse, lequel appareil est caractérisé par
un moyen (220) pour décaler le temps de transmission des paquets de données depuis chaque station dans le système afin que des paquets de données incluant les mêmes paquets de message soient transmis à des instants relativement différents ;
un moyen (220) pour coder dans un paquet de commande la fréquence et le décalage temporel de la station en train d'être accordée par rapport à une station prédéterminée à décalage nul ; et
un moyen (220) pour coder dans un paquet de commande une liste d'autres fréquences de station et le décalage temporel pour chaque autre station, chaque récepteur déterminant à partir des paquets de commande la fréquence et le décalage temporel de la station qui transmettra ensuite le paquet de message correspondant au récepteur, afin que la probabilité de réception d'un paquet de message par le récepteur soit améliorée.
